# EUROPÄISCHE PATENTANMELDUNG

(11) **EP 4 620 876 A1**
(43) Veröffentlichungstag der Anmeldung: **24.09.2025**
(21) Anmeldenummer: 25000026.2
(22) Anmeldetag: 12.03.2025
(51) Int. Cl.: B65G 59/02, B65G 15/14

(54) **ENTSTAPELMASCHINE**

(30) Priorität: 22.03.2024 IT 202400006394
(71) Anmelder: Tanzer Maschinenbau Srl, 39011 Lana (BZ) (IT)
(72) Erfinder: Gitterle, Christof, I-39020 Kastelbel Tschars (BZ) (IT); Mantinger, Martin, I-39010 Nalles (Bz) (IT); Tanzer, Peter, I-39011 Lana (BZ) (IT); Ungerer, Thomas, I-39011 Lana (BZ) (IT)
(74) Vertreter: Oberosler, Ludwig

(57) **Zusammenfassung**

Entstapelmaschine bestehend aus einem Rahmen (1) innerhalb welchem ein Laderaum (V) für Stapel (P) von Behälter (C1, C2), eventuell unterschiedlicher Modelle, vorgesehen ist welche unordentlich, nicht ausgerichtet oder auch vertikal ausgerichtet, gestapelt sind und auf einem Förderband (2) oder einem Transfermittel einer vertikal beweglichen (3v), mit horizontalen Förderbänder (3a) oder Transfermittel versehenen, Ladefläche (3) zugeführt werden, wobei der besagte Laderaum (V) an einer Seite, zwecks Laden (2h) des zu entstapelnden Stapels (P) und oben, zwecks Entnahme der einzelnen Steigen von der Oberseite des besagten Stapels (P), offen ist während auf der, der Beladeseite gegenüberliegenden Seite mindestens ein vertikales Anschlagprofil (7) vorgesehen ist gegen welches der Stapel (P), von einem um eine vertikale Achse schwenkbaren (4r) vertikalen Schiebebalken (4) zwecks Ausrichtung der Behälter (C1, C2) an den zur Zuführrichtung (2h) quer verlaufenden Seitenflächen, gedrückt wird, wobei im unteren Bereich des Laderaumes (V) unterhalb der maximal abgesenkten Ladefläche (3), an beiden zur Zuführrichtung (2h) des Stapels (P) parallelen Seiten, um eine zur Zuführrichtung (2h) der Stapel (P) parallelen Achse (5a) schwenkbare (5r) über Kurbelmechanismus (5e, 5c) angetriebene Paare von Ausrichtbalken (5) gelagert sind, wobei an den selben Seiten des Laderaums (V) bewegliche (6v, 6t) Träger (6d) gelagert sind welche am unteren Ende von einem Motor (6m) über ein am Rahmen (1) gelagertes (6j) schwenkbares Element (6a) bewegt (6v) werden während sie im oberen Bereich von einem Motor (6n) über einen Kurbelwellenmechanismus (6e) und einem Pleuel (6g) bewegt (6t) werden und wobei die besagten Träger (6d) am oberen Ende mit Greif- und Transferbänder (6) ausgestattet sind welche in einer horizontalen Ebene angeordnet sind um in entgegengesetzter Richtung auf die Seitenkanten des an der Oberseite des Stapels (P) angeordneten Behälters (C1) wirken zu können um diese zu klemmen (6h), anzuheben (6v), in Achse zum Laderaum (V) zu bewegen (6t) und in Richtung eines Abtransportmittels oder -bandes (8), einer Rutsche oder einer Maschine für eventuelle weitere Bearbeitung zu bewegen und darüber fallen zu lassen.

## Beschreibung

Die Erfindung bezieht sich auf eine Maschine zum Entstapeln einzelner Behälter von der Oberseite eines Stapels, welche auch für das Entstapeln an Stapel welche aus unterschiedlichen, unordentlich und nicht vertikal ausgerichteten, Modellen von Behältern bestehen, geeignet ist.

Insbesondere während der Handhabung der leeren Steigen aus Kunststoff mit klappbaren Seitenwänden werden diese oft, zwecks Rückerstattung z.B. seitens der Supermärkte an die Lieferanten, mit zugeklappten Seitenwänden nicht in geordneter Weise, ohne Beachtung der unterschiedlichen Modelle und nicht zueinander ausgerichtet, gestapelt. Diese Umstände bewirken, dass diese Stapel weiteren Bearbeitungsprozessen, z.B. zwecks Sortierung und geordneter Stapelung der Steigen nach den unterschiedlichen Modellen, zugeführt werden müssen. Es sind Sortier- und Stapelmaschinen bekannt welche jedoch nur geordnete Stapel mit zueinander vertikal, innerhalb enger Toleranzen, ausgerichteten Behältern bearbeiten können. Die besagte Ausrichtung ist in gewissen Fällen nur schwierig erreichbar weil die Einrastvorsprünge einiger Modelle nicht mit den Einrastsitzen anderer Modelle kompatibel sind, wodurch eine schräge, unstabile Überlagerung der einzelnen übereinander liegenden Steigen und somit die Entstehung von Stapel mit nicht vertikal ausgerichteten Komponenten erfolgt, welche seitlich geneigt sind und/oder mit Steigen deren Längskanten, bezogen auf die oberhalb oder unterhalb anliegenden Steigen, seitlich vorstehen. Die bekannten Entstapel- und/oder Sortiermaschinen sind nicht für die Bearbeitung von Stapel welche die beschriebenen Stapeldefekte oder Mängel betreffend die Ausrichtung zwischen den Komponenten innerhalb einer relativ engen Toleranz aufweisen, geeignet. Weiters sind die Entnahmevorrichtungen für die einzelnen Steigen von der Stapeloberseite nicht in der Lage störungsfrei zu arbeiten, wenn die besagten Behälter nicht gemäß der Achse des Stapels positioniert sind.

Aus der IT BZ20100019 A1 des selben Antragstellers ist eine Entstapelmaschine bekannt in welcher das vertikale Ausrichten der gestapelten Behälter durch seitlich im Zuführbereich, unmittelbar vor dem Laderaum für den zu bearbeitenden Stapel, gemäß einer vertikalen Achse schwenkbare Flügelelemente vorgesehen sind. Diese Flügelelemente wirken durch entgegengesetzte Schwenkbewegungen, während des Zuführens des Stapels in Richtung Laderaum, seitlich auf die zur Zuführrichtung parallelen Seitenflächen des Stapels. Die selben Flügelelemente wirken, nach vollständigem Einführen des Stapels in den Laderaum, auf die hintere vertikale Fläche des Stapel um die einzelnen Behälter gegen die vordere Anschlagfläche des Lagerraumes zu drücken und dadurch eine vertikale Ausrichtung der Behälter zu erreichen. Diese Ausrichtungsvorgänge erwiesen sich als zeitaufwändig und wenig effizient

Die Erfindung stellt sich die Aufgabe eine Entstapelmaschine zu schaffen welche in der Lage ist Stapel unordentlich gestapelten Behälter unterschiedlicher Modelle welche unter sich nicht ausgerichtet, bzw. unter sich instabil und nicht regulär, ohne gegenseitiges effizientes Einrasten, zueinander nicht parallel aufliegen, wobei die entsprechenden Behälter nicht mit den Kanten des jeweils unteren und/oder oberen Behälters vertikal ausgerichtet sind und oft eine nicht horizontale und/oder eine von der vertikalen Achse des Stapel verschobene Position einnehmen, zu bearbeiten, ohne die Bearbeitung vertikal innerhalb enger Toleranzen ausgerichteter Stapel auszuschließen.

Zur Lösung dieser Aufgabe schlägt die Erfindung eine Maschine vor welche an der Zuführseite der Stapel einen vertikalen Laderaum aufweist in dessen unteren Bereich eine Ladefläche vertikal beweglich ist welche mit horizontalen Transfermitteln ausgestattet ist um die, z.B. von einem horizontalen Transportband oder Transportmittel zugeführten Stapel aufnehmen zu können. Am Behälterstapel wird innerhalb des besagten, nach oben und zur Zuführseite hin offenen, Laderaums eventuell eine grobe Ausrichtung und ein Zusammenschieben der Behälter, bzw. der Steigen mit zugeklappten oder offenen Seitenwänden, quer zur Zuführrichtung , mittels einem Paar von Ausrichtbalken durchgeführt welche an beiden der, zur Zuführrichtung parallelen, Seiten vorgesehen sind und zueinander in Gegenrichtung, quer zur Zuführrichtung der Stapel, schwenkbar sind. Das besagte eventuelle grobe vertikale Ausrichten erhöht die Leistung und die Funktionssicherheit der Maschine und reduziert die Bearbeitungszeit sowie die Zeiten für das Ergreifen und Entnehmen der einzelnen Behälter während des Entstapelns. Innerhalb des selben Laderaums wird eine grobe Ausrichtung und ein Zusammenschieben gemäß der Zuführrichtung der Stapel mittels mindestens einem Schiebebalken durchgeführt welcher um eine vertikale Achse in Zuführrichtung der Stapel schwenkt, rückseitig auf den Stapel wirkt indem er gegen die Rückseite drückt um die Vorderseite gegen mindestens ein vertikales festes oder vertikal bewegliches Anschlagprofil zu schieben. Das besagte Ausrichten und Zusammenschieben in zwei Richtungen dient um ein grobes Ausrichten, ohne Zurechtrichten eventueller einzelner Behälter welche, z.B. wegen der nicht kompatiblen Einrastvorsprünge der unterschiedlichen gegenseitig aufliegenden Modelle, schräg und oder außerhalb der Achse positioniert sind, zu erreichen. Anschließend wird der Stapel von der Ladefläche angehoben bis sich der Behälter an der Oberseite des Stapels in einem, im oberen Bereich des Laderaums vorgesehen, Erhebungsbereich befindet. Im genannten Erhebungsbereich ist beidseitig, bezogen auf die Zuführrichtung der Stapel, unmittelbar unter den Greif- und Transferbändern mindestens eine vorzugsweise Laser-Abstandsmesssonde vorgesehen um den exakten Abstand zwischen jeder der beiden Seitenkanten des Bodens des Behälters an der Stapeloberseite welche parallel zu dessen Zuführrichtung und zu den besagten Greif- und Transferbändern verlaufen ,zu erheben. Diese sind am oberen Ende mit zwei beweglichen, an den entsprechenden Seite innerhalb des Laderaumes angeordneten, Haltern versehen und sind mittels elektrischer Stellmechanismen, pneumatischer oder hydraulischer Zylinder, Zahnrad- oder Gewindestangenmechanismen bewegbar um eine schwenkende oder geradlinige Bewegung in vertikaler und horizontaler Richtung auszuführen, um den zu entnehmenden Behälter zwischen den Greif- und Förderbändern, welche seitlich auf die Bodenränder des Behälters durch eine gegenläufige horizontale oder bogenförmige Annäherungsbewegung wirken, klemmen zu können und ihn durch eine gegenläufige Spreizbewegung freizulassen. Die selben Abstandsmesssonden erheben auch, vorzugsweise während der Absenkfase der beweglichen mit Greif- und Transferbänder ausgestatteten Träger oder während des Anhebens des Stapels, den Abstand zwischen den Seitenrändern des zu entnehmenden Behälters und den entsprechenden Seitenrändern des darunter liegenden Behälters. Diese Erhebung ermöglicht die exakte Positionierung der beiden Greifbänder in vertikaler Richtung so dass sie ausschließlich an den entsprechenden Seitenrändern des zu entnehmenden Behälters greifen, ohne dass sie mit den entsprechenden Rändern des darunter angeordneten Behälters in Kontakt kommen. Weiters können die selben Abstandsmesssonden, während der Anhebefase des entnommenen Behälters, auch genutzt werden um die Präsenz eines, eventuell unter dem entnommenen Behälter unglücklicherweise hängen gebliebenen Behälters zu erheben; in diesem Fall wird ein Warnsignal aktiviert und die Maschine angehalten.

Weiters erheben die Laserstrahlen welche unter dem soeben entnommenen Behälter hindurchscheinen das Niveau des darunter angeordneten Behälters welcher als nächster zu entnehmen ist, um bereits den Konsens für das Anheben des Stapels zu geben und diesen für die folgende Entnahme bereitzustellen. Natürlich ist der Antrieb der beweglichen Träger mit den Greif- und Transferbändern während der Fase der Entnahme der Behälter von der Stapeloberseite durch die vorherigen Erhebungen seitens der Abstandsmesssonden gesteuert. Anschließend an das Ergreifen des Behälters durch Klemmen zwischen den Greifbändern wird dieser vom Stapel abgehoben indem die entsprechenden Träger nach oben bewegt und mit dem Behälter in eine Position koachsial mit der Achse des Laderaums gebracht werden, anschließend werden die Träger horizontal bewegt um den Behälter in eine Position über einem Abführband, eine Abführeinrichtung, eine Rutsche oder eine Zuführeinrichtung für eine folgende Bearbeitungsmaschine zu bringen und die Greif- und Transferbänder zu betätigt um den Behälter durch Spreizen der Träger mit den Greifbändern fallen zu lassen. Anschließend werden die Greifbänder in gespreizter Stellung durch Betätigen der bewegbaren Träger in die Ausgangsposition entsprechend der Oberseite des Stapels gebracht um anschließend, während einer Absenkbewegung, mittels der unmittelbar unter den Greif- und Transferbänder vorgesehenen Abstandsmesssonden, die Position des folgenden zu entnehmenden Behälters, insbesondere den Abstand der Seitenränder zu den Greifbändern, sowie die Position der besagten Ränder in vertikaler Richtung zu erheben, weil diese eventuell nicht in der selben Ebene liegen und wird der Abstand in vertikaler Richtung zwischen den Seitenrändern des zu entnehmenden Behälters und den entsprechenden Rändern des darunter angeordneten Behälters erhoben.

Wenn hingegen die Abstandsmesssonden, entsprechend einer Weiterentwicklung des Erfindungsgedankens, fest am Maschinenrahmen, im Erhebungsbereich im oberen Bereich des Laderaumes vorgesehen sind, erfolgt das Anheben des Stapels so dass das Unterbrechen der Laserstrahlen seitens des Behälters an der Oberseite des Stapels erfolgt, wobei die Daten erhoben werden welche die notwendige horizontale oder bogenförmige Bewegung der Greifbänder definieren um mit den entsprechenden Seitenkanten in Kontakt zu kommen und um das Niveau zu definieren welches die Bänder einnehmen müssen, wobei ein Mindestabstand von den entsprechenden Seitenrändern der darunter angeordneten Steige berücksichtigt werden muss.

Die Erfindung schließt nicht aus dass, zwecks Durchführung der Abstandserhebungen, im Erhebungsbereich ein vertikales Anheben des zu entnehmenden Behälters durch vertikales Anheben der Ladefläche erfolgt, während die vertikale Anpassung der einzelnen Greifbänder an die effektive Position der Seitenkanten des Behälters, eventuell auf unterschiedlichen Höhen im Fall schräg positionierter Behälter durch vertikales Betätigen der beweglichen Träger mit den Greifbändern erfolgt.

Natürlich kann die Entstapelmaschine, zwecks Erkennung der verschiedenen entstapelten Modelle mit einer bekannten Vorrichtung zur Bilderkennung ausgestattet sein und das Abführförderband kann von einer Stapelmaschine für des getrennte Stapeln der unterschiedlichen Behältermodelle oder der entstapelten Behälter ersetzt werden.

Die Erfindung wird anhand eines vorzuziehenden Ausführungsbeispiels einer, in den beiliegenden Zeichnungen schematisch dargestellten, erfindungsgemäßen Entstapelmaschine näher erklärt, dabei erfüllen die Zeichnungen rein erklärenden, nicht begrenzenden Zweck.

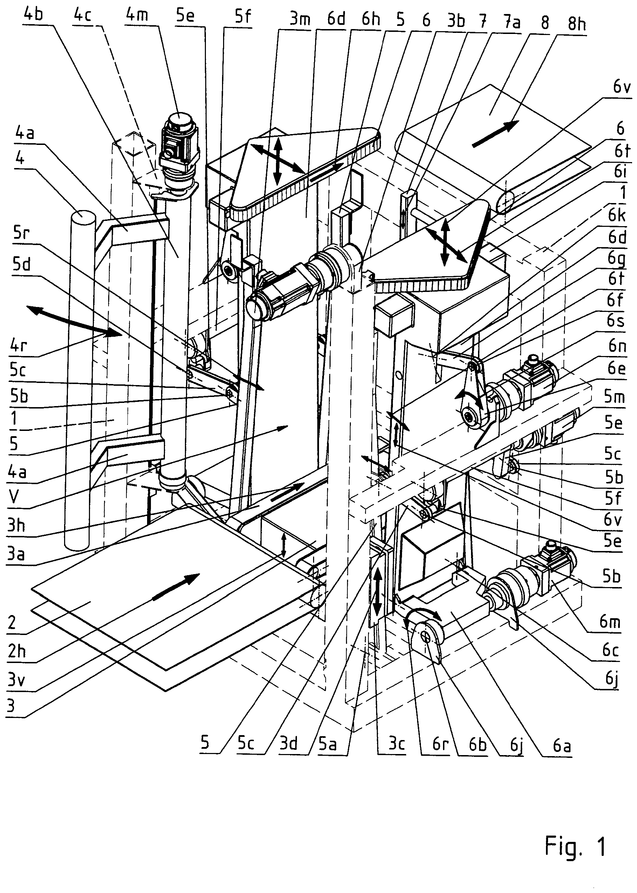

Die Fig. 1 zeigt in perspektivischer Darstellung die erfindungsgemäße Entstapelmaschine, der Rahmen ist mit strichlierten Linien dargestellt um die beweglichen Teile der Maschine deutlicher zu zeigen, der Laderaum ist nicht von einem Steigenstapel besetzt, der Schiebebalken ist in geöffneter Position, die Ausrichtbalken sind in den Laderaum geneigt und die Greifbänder nehmen eine zurückgezogene Position ein.

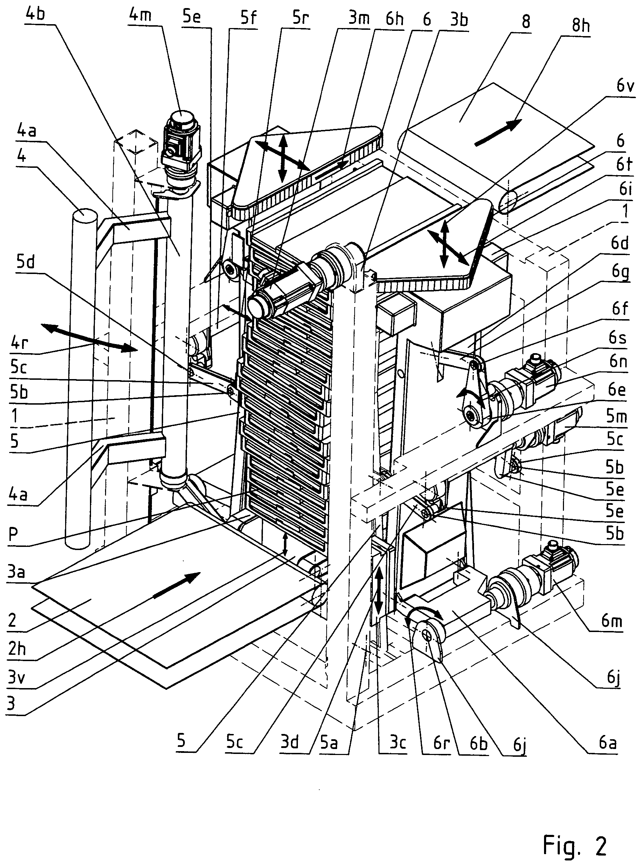

Die Fig. 2 zeigt die selbe in Fig. 1 dargestellte Entstapelmaschine mit dem Laderaum von einem Stapel von Steigen mit zugeklappten Seitenwänden besetzt welche von oben zu entstapeln ist, mit dem Schiebebalken in geöffneter Position, mit den seitlich auf den Stapel wirkenden Ausrichtbalken und mit den Greifbändern in zurückgezogener Position.

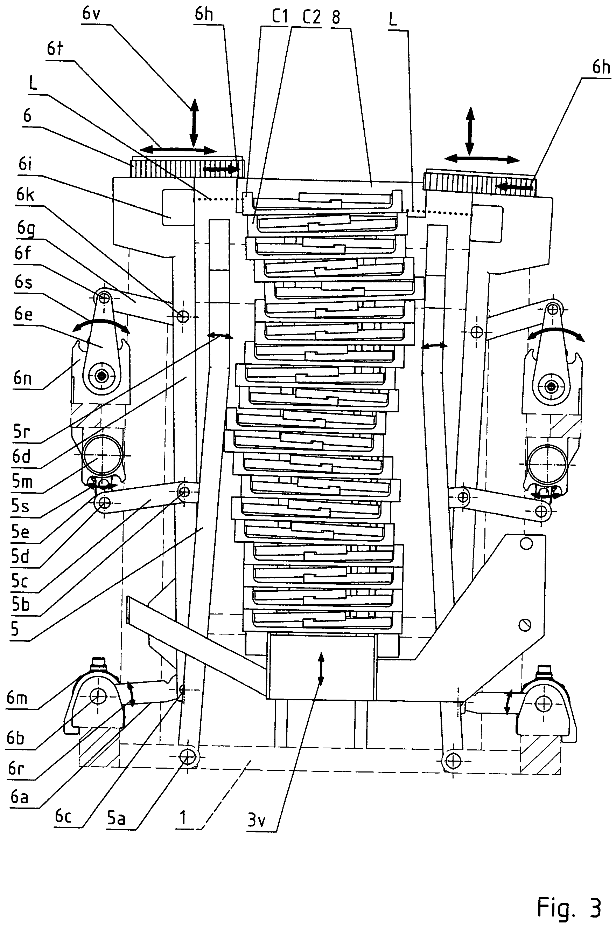

Die Fig. 3 zeigt die in Fig. 2 dargestellte Entstapelmaschine gesehen von der Zuführseite, in Schnittdarstellung gemäß einer vertikalen Schnittebene durch eine Position nach dem Zuführförderband und dem Schiebebalken.

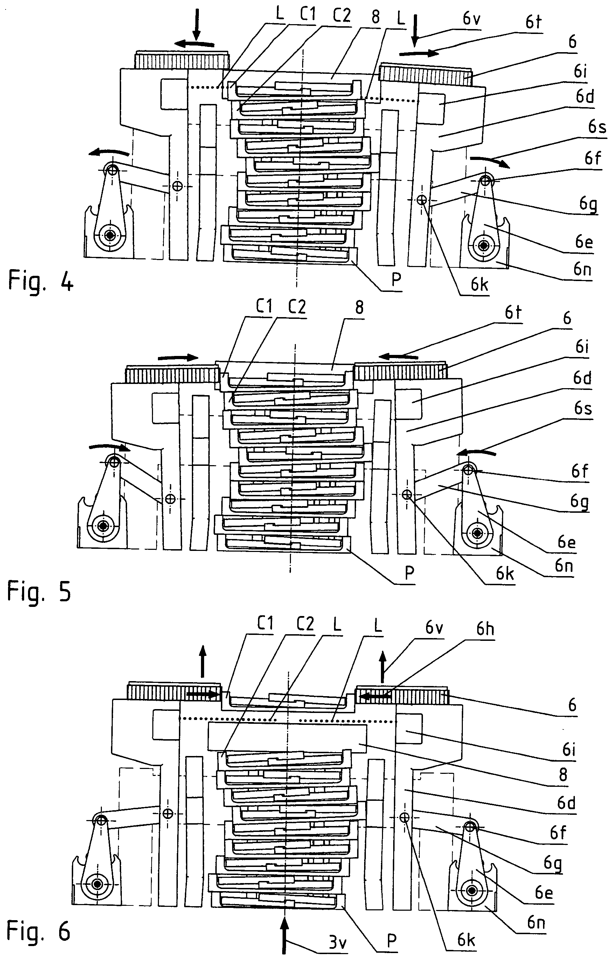

Die Fig. 4 zeigt den oberen Teil der erfindungsgemäßen Entstapelmaschine gemäß der Darstellungen von Fig. 1 bis Fig. 4 mit den rückgezogenen Greifbändern und den Lase-Abstansmesssonden welche die Position der zu entnehmenden Steige an der Oberseite des Stapels erfasst.

Die Fig. 5 zeigt den oberen Teil der in Fig. 4 dargestellten, erfindungsgemäßen Entstapelmaschine mit den, auf die Position der zwei entsprechenden Seitenkanten der zu entnehmenden Steige abgesenkten Greifbänder, in Greifposition.

Die Fig. 6 zeigt den oberen Teil der in den Fig. 4 und 5 dargestellten, erfindungsgemäßen Entstapelmaschine mit den Greifbändern welche die Seitenkanten der zu entnehmenden Steige klemmen, welche über das Abführförderband angehoben ist und koachsial zur Achse des Laderaumes positioniert ist.

Die erfindungsgemäße Entstapelmaschine besteht aus einem starren Rahmen 1 für die Lagerung verschiedener beweglicher Teile welche um einen Laderaum V für Stapel P von Steigen mit klappbaren Seitenwänden angeordnet sind und welche mittels Förderband 2 im unteren Bereich des Laderaumes V zugeführt werden, während die einzelnen Steigen C1, C2 anschließend von der Oberseite des Stapels P mittels einem Transportband 8 im oberen Bereich des Laderaumes V entnommen 8h werden. Im Bodenbereich des Laderaumes V ist eine mittels Motor 3m vertikal bewegbare 3v Ladefläche 3 vorgesehen welche einen vertikal am Rahmen 1 verfahrbaren 3d Laufwagen 3c bewegt und seitlich mit horizontal 3a, in Zuführrichtung 2h der Stapel P bewegten 3h Transportbänder, versehen ist. An beiden zur Zuführrichtung 2h der Stapel P parallelen Seiten sind im unteren Bereich des Laderaumes V, jeweils ein Paar von Ausrichtbalken 5 schwenkbar 5r am Rahmen gelagert welche am unteren Teil eine geneigte Bewegung gegen den Stapel ausführen während der obere am Stapel anliegende Teil eine vertikale Bewegung parallel zu den genannten Seiten ausführt. Die besagte Schwenkbewegung 5r ist von einem, Motor 5m mittels Kurbelwellen 5e mit Zapfen 5d und Pleuel 5c bewegt 5s welches mit dem entgegengesetzten Ende am Ausrichtbalken 5 gelagert ist. Diese Ausrichtbalken 5 nehmen, während der Einführung des Stapels P eine zurückgezogene Position ein um nicht das Einführen der Stapel P, deren Steigen wegen der nicht kompatiblen Einrastvorsprünge der unterschiedlichen Modelle schräg und seitlich zur vertikalen Achse des Stapels verschobenen eher unordentlich gestapelt sind, zu behindern. Diese besagten Ausrichtbalken 5 sind nur an der Maschine mit hoher Leistung und hoher Funktionssicherheit vorgesehen. An der verschlossenen Seite des Laderaums V sind zwei, eventuell, z.B. mittels Pneumatikzylinder vertikal bewegbare 7a Anschlagprofile 7 vorgesehen um, während der Ladefase des Stapels auch im oberen Bereich, im Bereich des Abführtransportbandes 4 welches ungefähr auf der Höhe der Entnahmeöffnung im oberen Bereich des Laderaumes V vorgesehen ist, wirken zu können. Seitlich der Öffnung für das Einführen der Stapel P in den Laderaum V, im Bereich gegenüberliegend zu den Anschlagprofilen 7 ist, mittels vom Rahmen 1 abstehende Lager 4c, eine Drehstange 4b gelagert welche, mittels Arme 4a mit einem vertikalen Schiebebalken 4 verbunden ist, welcher von einer nicht die Zufuhr der Stapel P behindernden Position in eine an der hinteren Seite des Stapels anliegende, diesen in den Laderaum V schiebende Position gegen die besagten Anschlagprofile 7 bewegbar ist.

Im unteren Bereich, sind im Bereich der selben Seiten wo die Paare der Ausrichtbalken 5 im Innern des Laderaumes V gelagert sind, zwei Träger 6d schwenkbar 6t, 6v gelagert welche am oberen Ende mit Greif- und Transferbänder 6 und unmittelbar unterhalb dieser mit zwei Laser-Abstandmesssensoren 6i ausgestattet sind. Die horizontale Bewegung 6t und vertikale Bewegung 6v dieser Träger 6d wird am unteren Ende von einem Motor 6m übertragen welcher mittels Welle 6b ein schwenkbares Element 6a bewegt 6r welches am Träger 6d angelenkt 6c ist, während im oberen Bereich des selben Trägers 6d ein Kurbelwellenmechanismus mit Motor 6n, schwenkbarer 6s Kurbel 6e mit Zapfen 6f für ein Pleuel 6g wirkt, deren Ende am Träger 6d angelenkt 6k ist. Der Mechanismus mit Motor 6m und Schwenkelement 6a bewirkt somit eine Bewegung 6v des Trägers 6d nach oben, während der Kurbelwellenmechanismus 6e mit Pleuel 6g eine Annäherungs- und eine Spreizbewegung 6t zwischen den oberen Enden der Träger 6d mit den Greifbändern 6 und den Abstandsmesssonden 6i bewirkt.

Die Erfindung schließt nicht aus, dass der Antrieb der besagten vertikalen Bewegungen 6v und horizontalen Bewegungen 6t durch lineare Stellmechanismen, Zahnstangenmechanismen, Gewindespindelmechanismen oder mittels pneumatischer oder hydraulischer Zylinder erfolgt und dass die beweglichen Träger 6d am Rahmen 1 in vertikaler und in horizontaler Richtung gleitend angebracht sind. Die Greif- und Transferbänder 6 sind von der seitlich an den Kanten der Steigen C1, C2, parallel zur Zuführrichtung 2h des Stapels P, wirkenden Art. Die Abstandsmesssonden 6i senden vorzugsweise die Laserstrahlen L in einer zur Wirkungsebene der Greifbänder 6 parallelen, tiefer liegenden Ebene aus, die erhobenen Werte der Abstandsmesssonden 6i werden bearbeitet um die Motoren 6m und 6n, welche den spezifischen Träger 6d samt dem Greifband 6 und den entsprechenden Abstandsmesssonden 6i bewegen, zu steuern.

Das Abführförderband 8 für die einzelnen entstapelten Steigen C1, C2 kann ungefähr auf der Höhe des oberen Bereiches des Ladeaumes V, in einer zur maximalen Anhubhöhe der Greif- und Transportbänder 6, tieferen Position vorgesehen sein.

Das mittels der erfindungsgemäßen Entstapelmaschine durchführbare Entstapelverfahren umfasst folgende Fasen:
a) Zuführen 2h eines Stapels P unordentlich gestapelter und nicht vertikal zueinander ausgerichteter Steigen durch Betätigen 3h der Transportbänder der Ladefläche 3 innerhalb des Laderaumes V, gemäß einer zum Zuführförderband 2 ausgerichteten Position, wobei der Schiebebalken 4 eine die Zufuhr nicht behindernde Position einnimmt und wobei die Ausrichtbalken 5 und die schwenkbaren Träger 6d zusammen mit den Greiffbändern 6 und den nicht aktiven Abstandsmesssonden 6i, eine den Durchlauf des Stapels P nicht behindernde Position einnehmen;
b) Ausrichten und Zusammenfassen der den Stapel P bildenden Steigen indem der Schiebebalken 4 gegen die hintere Oberfläche des Stapels P bewegt 4r wird und dieser mit der vorderen Oberfläche gegen die Anschlagprofile 7 gedrückt wird welche sich eventuell mit den oberen Enden auf der selben Höhe des Abführförderbandes 8 oder etwas höher als dieses befinden, folgendes Absenken auf ein niedrigeres Niveau;
c) grobes seitliches vertikales Ausrichten der Steigen des Stapels P im Inneren des Laderaums V indem die Ausrichtbalken 5 seitlich in Gegenrichtung gleichzeitig gegen den Stapel P bewegt 5r werden;
d) vertikales Bewegen 6v der Träger 6d nach oben zwecks Erfassen der Position der Steige C1 an der Oberfläche des Stapels P und der Position der darunter liegenden Steige C2 mittels der Abstandsmesssonden 6i mit Bearbeitung der Messdaten (Abstände der zur Zuführrichtung 2h parallelen Seitenkanten in horizontaler Richtung und Abstände in vertikaler Richtung zwischen den selben Kanten der zu entstapelnden Steige C1 und der entsprechenden Kanten der darunter liegenden Steige C2;
e) Erfassen der zu entstapelnden Steige C1 durch Betätigen 6v, 6t der bewegbaren Träger 6d samt den Greif- und Transportbändern 6 um sie auf die Höhe der Seitenkanten der Steige C1 anzuheben, um sie in horizontaler Richtung gegeneinander zu bewegen 6t um die Steige zwischen den besagten Bändern zu klemmen;
f) Anheben der Steige C1 durch Betätigen 6v der bewegbaren Träger 6d;
g) Bewegen der Steige C1 entsprechend der Achse des Laderaums V indem beide schwenkbaren Träger 6d in die selbe Richtung bewegt 6t werden;
h) Bewegen der entstapelten Steige C1 in die Position über dem Abführförderband 8 indem die Bänder 6 bewegt 6h werden;
i) Ablegen der Steige C1 auf das Abführtransportband 8 durch Spreizen 6t der beweglichen Träger 6d mit den Bändern 6;
j) Wiederholung der groben vertikalen Ausrichtfase b) für die Steigen des Stapels P nach mindestens ein- oder mehrmaligem Anheben 3v des Stapels P, bzw. Entnahme der Steigen;
k) Wiederholung der Fasen von a) bis j) für die Entnahme jeder weiteren Steige mit Anheben 3v des Stapels auf eine Höhe entsprechend der Höhe einer Steige vor jeder Wiederholung der Fase d) bis zum vollkommenen Entstapeln;
l) Anheben der Ladeplattform 3 auf die Höhe des Zuführförderbandes 2 und Positionieren des Schiebebalkens 4, der Ausrichtbalken 5 und der beweglichen Träger 6d mit den Greifbändern 6 und den Abstandsmesssonden 6i in eine, nicht mit der Zufuhr 2h interferierenden Position, Laden 3h des nächsten Stapels P in den Laderaum V.

## Patentansprüche

1. Entstapelmaschine bestehend aus einem Rahmen (1) innerhalb welchem ein Laderaum (V) für Stapel (P) von Behälter (C1, C2), eventuell unterschiedlicher Modelle, vorgesehen ist welche unordentlich, nicht ausgerichtet oder auch vertikal ausgerichtet, gestapelt sind und auf einem Förderband (2) oder einem Transfermittel einer vertikal beweglichen (3v), mit horizontalen Förderbänder (3a) oder Transfermittel versehenen, Ladefläche (3) zugeführt werden, wobei der besagte Laderaum (V) an einer Seite, zwecks Laden (2h) des zu entstapelnden Stapels (P) und oben, zwecks Entnahme der einzelnen Steigen von der Oberseite des besagten Stapels (P), offen ist während auf der, der Beladeseite gegenüberliegenden Seite mindestens ein vertikales Anschlagprofil (7) vorgesehen ist gegen welches der Stapel (P), von einem um eine vertikale Achse schwenkbaren (4r) vertikalen Schiebebalken (4) zwecks Ausrichtung der Behälter (C1, C2) an den zur Zuführrichtung (2h) querverlaufenden Seitenflächen, gedrückt wird, **dadurch gekennzeichnet, dass** im unteren Bereich des Laderaumes (V) unterhalb der maximal abgesenkten Ladefläche (3), an beiden zur Zuführrichtung (2h) des Stapels (P) parallelen Seiten, um eine zur Zuführrichtung (2h) der Stapel (P) parallelen Achse (5a) schwenkbare (5r) über Kurbelmechanismus (5e, 5c) angetriebene Paare von Ausrichtbalken (5) gelagert sind, dass an den selben Seiten des Laderaums (V) bewegliche (6v, 6t) Träger (6d) gelagert sind welche am unteren Ende von einem Motor (6m) über ein am Rahmen (1) gelagertes (6j) schwenkbares Element (6a) bewegt (6v) werden während sie im oberen Bereich von einem Motor (6n) über einen Kurbelwellenmechanismus (6e) und einem Pleuel (6g) bewegt (6t) werden und dass die besagten Träger (6d) am oberen Ende mit Greif- und Transferbänder (6) ausgestattet sind welche in einer horizontalen Ebene angeordnet sind um in entgegengesetzter Richtung auf die Seitenkanten des an der Oberseite des Stapels (P) angeordneten Behälters (C1) wirken zu können um diese zu klemmen (6h), anzuheben (6v), in Achse zum Laderaum (V) zu bewegen (6t) und in Richtung eines Abtransportmittels oder -bandes (8), einer Rutsche oder einer Maschine für eventuelle weitere Bearbeitung zu bewegen und darüber fallen zu lassen.

2. Entstapelmaschine gemäß Anspruch 1, **dadurch gekennzeichnet, dass** die Paare der schwenkbaren (5r) Ausrichtbalken (5) eine Höhe aufweisen die ungefähr der maximalen Höhe des bearbeitbaren Stapels (P) entspricht, und von einem Kurbelwellenmechanismus (5e) mit Pleuel (5c) bewegt werden um gegen den, zur Zuführrichtung (2h) parallelen Seiten des Stapels (P) zu wirken um einen Stapel mit grob vertikal ausgerichteten Behältern zu erhalten, um die Zeit zur Erhebung mittels der Abstandsmesssensoren (6i) und zum Greifen und Transportieren (6h) seitens der Greif- und Transferbänder (6) während der Entstapelfase zu verkürzen und um die Funktionssicherheit während dieser besagten Fasen zu erhöhen.

3. Entstapelmaschine gemäß der Ansprüche 1 und 2, **dadurch gekennzeichnet, dass** die beweglichen Träger (6d) durch Zahnstangenmechanismen, Gewindestangenmechanismen, lineare Stellmechanismen oder pneumatische oder hydraulische Zylinder, vertikal bewegt (6v) und horizontal bewegt (6t) werden.

4. Entstapelmaschine gemäß der Ansprüche 1 und 2, **dadurch gekennzeichnet, dass** die vertikalen Positionierungsbewegungen und die Greif- und Freigabebewegungen an dem zu entnehmenden Behälter (C1) an der Oberseite des Stapels (P) seitens, an den oberen Enden der bewegbaren Träger (6d) vorgesehenen, Greif- und Transferbänder (6) den vertikalen Bewegungen (6v) und den horizontalen Bewegungen (6t) der besagten Träger (6d) entsprechen und von den Erhebungen mindestens einer Laser-Abstandsmesssonde (6i) bestimmt sind welche an beiden bewegbaren Trägern (6d) unmittelbar unterhalb der besagten Bänder (6) vorgesehen sind, wobei die zueinander in Gegenrichtung abgestrahlten Laserstrahlen (L) in einer zu den Bändern (6) parallelen Ebene liegen.

5. Entstapelmaschine gemäß der Ansprüche von 1 bis 3, **dadurch gekennzeichnet, dass** die Erhebung der Position der beiden, zur Zuführrichtung des Stapels (P) parallelen, Seitenkanten des von der Oberseite des Stapels (P) zu entnehmenden Behälters (C1), des vertikalen Abstandes der entsprechenden Ränder des darunter liegenden Behälters (C2) zu den Seitenkanten des ersten Behälters und des horizontalen Abstandes zwischen den beiden besagten Kanten des darunter liegenden Behälters, während der vertikalen Absenkbewegung (6v) der bewegbaren Träger (6d) zusammen mit den Greifbändern (6) und den entsprechenden Abstandsmesssonden (6i) erfolgt und dass, infolge des Anhebens des Behälters (C1), die Erhebung der Höhe der Oberseite des Stapels (P), bzw. der Position der Seitenkanten der darunter liegenden, als nächsten zu entnehmenden, Behälter (C2) erfolgt.

6. Entstapelmaschine gemäß der Ansprüche 1 und 2, **dadurch gekennzeichnet, dass** die Abstandsmesssonden (6i) am Rahmen (1) der Maschine an beiden zur Zuführrichtung (2h) des Stapels (P) parallelen Seiten, im oberen Bereich des Laderaumes (V), oberhalb der Höhe des Stapels mit maximal bearbeitbarer Höhe, befestigt sind, dass die Laserstrahlen (L) der Abstandsmesssonden (6) in einer horizontalen Ebene gegeneinander in Richtung des Stapels (P) innerhalb des Laderaumes (V) abgestrahlt werden und dass die Erhebung der Position beider parallel zur Zuführrichtung (2h) verlaufenden Seitenkanten des zu entnehmenden Behälters (C1) und des darunter liegenden Behälters (C2) in horizontaler und in vertikaler Richtung während des Anhebens (3v) der Ladefläche des Stapels (P) erfolgt.

7. Entstapelmaschine gemäß Anspruch 1, **dadurch gekennzeichnet, dass** der oder die im Innern des Laderaums (V), gegenüber der Zuführseite angebrachten, Anschlagprofile (7) fest oder vertikal mittels einem pneumatischen oder hydraulischen Zylinder, einem Zahnstangenmechanismus, einem Gewindestangenmechanismus, einem Kurbelwellenmechanismus mit Pleuelstange oder mittels linearem Stellmechanismus, beweglich (7a) angebracht sein können.

8. Entstapelverfahren durchgeführt mittels einer Entstapelmaschine gemäß der vorhergehenden Ansprüche, umfassend einen Rahmen (1) innerhalb welchem ein Laderaum (V) für Stapel (P) nicht vertikal ausgerichtete, auf einem Förderband (2) oder einem Transfermittel einer vertikal bewegbaren (3v) mit horizontalen Förderbändern (3a) oder Transfermitteln ausgestatteten Ladefläche (3) zugeführte Behälter (C1, C2), wobei der besagte Laderaum (V) an einer der Seiten zwecks Aufnahme des zu entstapelnden Stapels (P) und oben zwecks Entnahme der einzelnen Behälter von der Oberseite des besagten Stapels (P), offen ist während an der der Zuführseite entgegengesetzten Seite mindestens ein vertikales Anschlagprofil (7) vorgesehen ist und an beiden Seiten im Innern des Laderaumes (V) ein vertikal beweglicher (6v) und horizontal beweglicher (6t) Träger (6d) vorgesehen ist welcher am oberen Ende mit einem Greifband (6) und unmittelbar unterhalb dessen mit mindestens einer Abstandsmesssonde (6i) ausgestattet ist während am Rahmen (1) in einer Ebene unterhalb der Ladefläche (3) an beiden, zur Zuführrichtung (2h) parallelen Seiten ein Paar durch Kurbelmechanismus (5e, 5c) schwenkbare (5r) Ausrichtbalken (5) vorgesehen sind, **gekennzeichnet durch** die folgenden Fasen:
a) Zuführen (2h) eines Stapels (P) unordentlich gestapelter und nicht vertikal zueinander ausgerichteter Behälter, dabei ist die Ladefläche (3) im Inneren des Laderaums (V) mit dem Zuführförderband (2) ausgerichtet;
b) Ausrichten und Zusammenfassen der den Stapel (P) bildenden Behälter indem der Schiebebalken (4) gegen die hintere Oberfläche des Stapels (P) bewegt (4r) wird und dieser mit der vorderen Oberfläche gegen die Anschlagprofile (7) gedrückt wird welche sich eventuell mit den oberen Enden auf der selben Höhe des Abführförderbandes (8) oder etwas höher als dieses befinden, folgendes Absenken auf ein niedrigeres Niveau;
c) grobes seitliches vertikales Ausrichten der Behälter des Stapels (P) im Inneren des Laderaums (V) indem die Balken (5) seitlich in Gegenrichtung gleichzeitig gegen den Stapel (P) bewegt (5r) werden;
d) vertikales Bewegen (6v) der beweglichen Träger (6d) nach oben zwecks Erfassen der Position des Behälters (C1) an der Oberseite des Stapels (P) und der Position des darunter liegenden Behälters (C2) mittels der Abstandsmesssonden (6i) mit Bearbeitung der Messdaten;
e) Erfassen des zu entstapelnden Behälters (C1) durch Betätigen (6v, 6t) der bewegbaren Träger (6d) samt den Greif- und Transportbändern (6) um sie auf die Höhe der Seitenkanten des Behälters anzuheben, um sie in horizontaler Richtung gegeneinander zu bewegen (6t) um ihn zwischen den besagten Bändern zu klemmen;
f) Anheben des Behälters (C1) durch Betätigen (6v) der bewegbaren Träger (6d);
g) Bewegen des Behälters (C1) entsprechend der Achse des Laderaums (V) indem beide schwenkbaren Träger (6d) in die selbe Richtung (6t) bewegt werden;
h) Bewegen des entstapelten Behälters (C1) in die Position über dem Abführförderband (8) indem die Bänder (6) bewegt (6h) werden;
i) Ablegen des Behälters (C1) auf das Abführtransportband (8) durch Spreizen (6t) der beweglichen Träger (6d) mit den Bändern (6);
j) Wiederholung der groben vertikalen Ausrichtfase b) für die Behälter des Stapels (P) nach mindestens ein- oder mehrmaligem Anheben (3v) des Stapels (P), bzw. Entnahme der Behälter;
k) Wiederholung der Fasen von a) bis j) für die Entnahme jedes weiteren Behälters mit Anheben (3v) des Stapels auf eine Höhe entsprechend der Höhe eines Behälters vor jeder Wiederholung der Fase d) bis zum vollkommenen Entstapeln;
l) Anheben der Hebeplattform (3) auf die Höhe des Zuführförderbandes (2) und Positionieren des Schiebebalkens (4), der Ausrichtbalken (5) und der beweglichen Träger (6d) mit den Greifbändern (6) und den Abstandsmesssonden (6i) in einer, nicht mit der Zufuhr (2h) interferierenden Position, Laden (3h) des nächsten Stapels (P) in den Laderaum (V).
